# NEUE EUROPÄISCHE PATENTSCHRIFT

(11) **EP 3 209 907 B2**
(45) Veröffentlichungstag und Bekanntmachung des Hinweises auf die Entscheidung über den Einspruch: **20.12.2023**
(45) Hinweis auf die Patenterteilung: 25.12.2019
(21) Anmeldenummer: 15784361.6
(22) Anmeldetag: 22.10.2015
(51) Int. Cl.: F16H 57/04

(54) **FLUIDFÜHRUNGSVORRICHTUNG UND KRAFTFAHRZEUGGETRIEBE**
FLUID CONDUCTING DEVICE AND MOTOR VEHICLE TRANSMISSION
DISPOSITIF DE GUIDAGE DE FLUIDE ET BOÎTE DE VITESSES DE VÉHICULE AUTOMOBILE

(30) Priorität: 24.10.2014 DE 102014115517
(43) Veröffentlichungstag der Anmeldung: 30.08.2017
(73) Patentinhaber: Magna PT B.V. & Co. KG, 74199 Untergruppenbach (DE)
(72) Erfinder: PRELLEZO, Rafael, 71665 Vaihingen/Enz (DE)
(74) Vertreter: Rausch, Gabriele
(86) Internationale Anmeldenummer: PCT/EP2015/074438
(87) Internationale Veröffentlichungsnummer: WO 2016/062793

(56) Entgegenhaltungen:
- EP-A1- 2 447 574
- DE-A1-102012 215 355
- JP-A- 2008 232 357
- JP-A- 2010 048 410

## Beschreibung

Die vorliegende Erfindung betrifft eine Fluidführungsvorrichtung für ein Kraftfahrzeuggetriebe, mit wenigstens einer Fluidspaltoberfläche, die im Querschnitt kreisbogenförmig in Bezug auf eine Längsachse ausgebildet ist, so dass zwischen der Fluidspaltoberfläche und einem zugeordneten Zahnrad eines Kraftfahrzeuggetriebes ein Fluidspalt gebildet werden kann.

Die vorliegende Erfindung betrifft ferner ein Kraftfahrzeuggetriebe mit einem Gehäuse, innerhalb dessen eine Welle drehbar gelagert ist, an der wenigstens zwei Zahnräder axial versetzt zueinander gelagert sind, und wobei in dem Gehäuse eine Fluidführungsvorrichtung angeordnet ist.

Eine derartige Fluidführungsvorrichtung in Form eines Fluidausgleichsbehälters ist aus dem Dokument DE 10 2006 022 964 A1 bekannt. Hierbei weist der Fluidausgleichsbehälter eine an die Einbausituation in dem Getriebe angepasste Form auf, mit einer Innenkontor, die an die Außenkonturen von Radsätzen angepasst ist. Die Innenkontur kann dabei dazu dienen, von den Radsätzen wegspritzendes Fluid zu führen. Der Fluidausgleichsbehälter weist einen oben liegenden Fluideingang mit Durch-flussbegrenzungsmitteln sowie einen Fluidausgang im Bereich eines Fluidsumpfes auf, aus dem eine Pumpe für eine Einspritzschmierung einen Fluid ansaugt.

Eine weitere Form von Fluidausgleichsbehälter ist aus dem Dokument DE 103 08 560 A1 bekannt.

Ein Getriebe mit einem geschlossenen Behälter im Gehäuse ist aus dem Dokument DE 4 108 657 A1 bekannt, wobei der Behälter bei steigender Temperatur den Volumenzuwachs des Öls aufnimmt, um den Ölspiegel weniger steigen zu lassen und Plantschverluste zu verringern. Bei tiefen Temperaturen verhindert der als Verdränger dienende Behälter, dass eine Saugöffnung einer Pumpe aus dem Ölspiegel auftaucht und die Pumpe Luft saugt.

Ein weiterer Verdrängungskörper für ein Getriebe ist als Hohlkörper ausgeführt und zwischen Funktionsteilen und einem Getriebegehäuse angeordnet, wie es aus dem Dokument DE 10 2010 010 186 A1 bekannt geworden ist.

Ferner offenbart das Dokument DE 10 238 000 A1 einen Verdrängungskörper in Form eines massiven Bauelementes aus Metallgussmaterial, insbesondere aus Leichtmetall, oder auch aus einem Kunststoffmaterial. Das gleiche Dokument offenbart ferner ein wannenartiges Verdrängungselement mit Fluidspaltoberflächen.

Eine Verdrängungsvorrichtung mit variablem Verdrängungsvolumen ist bspw. aus dem Dokument DE 3 630 973 A1 bekannt.

JP 2010/048410 A zeigt eine Schmiervorrichtung für eine stabile Schmierung. Die Schmiervorrichtung weist eine Ölrinne auf, welche einen mehrere Führungsabschnitte umfasst. Der Führungsabschnitt umfasst jeweils einen Sammelabschnitt, einen Mittelabschnitt und einen Auslaufabschnitt. Der Auslaufabschnitt ist zum einen so ausgerichtet, dass das gesammelte Öl axial in Richtung eines Vorlegerades geleitet wird, weitere Auslaufabschnitte führen das Öl radial.

JP 2008 232 357 A zeigt eine Schmiervorrichtung, die die Längsbewegung des Schmieröls in einem Getriebe mit einem Getriebedeckel ausreichend unterdrückt. Die Getriebeabdeckung weist eine Verengung eines Spalts zwischen der Innenfläche eines Gehäuses dem Deckel auf. Eine Gummidichtung ist als Dichtungsplatte zum Abdichten des Spalts auf der Getriebeabdeckung über ein Plattenelement installiert.

Zusammenfassend offenbart der Stand der Technik Körper oder Vorrichtungen zum Einsetzen in ein Gehäuse eines Fahrzeuggetriebes, die entweder dazu dienen, das Fluidniveau im Inneren des Gehäuses einzustellen bzw. zu regulieren.

Alternativ dienen derartige Vorrichtungen dazu, Fluid gezielt an bestimmte Orte des Getriebes zu führen, bspw. zu Radsätzen, um diese zu schmieren.

Es ist vor diesem Hintergrund eine Aufgabe der Erfindung, eine verbesserte Fluidführungs-vorrichtung anzugeben, die vorzugsweise wenigstens einen der Nachteile des oben beschriebenen Standes der Technik überwindet.

Die obige Aufgabe wird bei der eingangs genannten Fluidführungsvorrichtung in einem ersten Aspekt dadurch gelöst, dass diese wenigstens eine sich axial erstreckende Rinne aufweist, die von oben mit Fluid befüllbar ist und dazu ausgebildet ist, aufgenommenes Fluid in axialer Richtung zu leiten.

Die Fluidführungsvorrichtung dient zum Einbau in den Innenraum eines Getriebegehäuses, und zwar vorzugsweise unterhalb wenigstens eines Radsatzes des darin aufgenommenen Getriebes. Die Fluidführungsvorrichtung kann folglich zum einen die Funktion haben, Einfluss auf das Fluidniveau im Inneren des Gehäuses auszuüben. Mit anderen Worten kann das zur Schmierung und/oder Kühlung vorgesehene Fluidvolumen in dem Gehäuse reduziert werden, so dass Plantschverluste und Wirkungsgradverschlechterungen vermieden werden können. Ferner stellt die Fluidführungsvorrichtung über die Möglichkeit, einen Fluidspalt zwischen einer Fluidspaltoberfläche und einem Zahnrad einzurichten, die Funktion bereit, den Fluidspalt im Betrieb des Getriebes zu räumen, so dass Plantschverluste vermieden werden können. Durch die Kreisbogenform der Fluidspaltoberfläche kann zudem erreicht werden, dass das aus dem Fluidspalt mitgenommene und weggeschleuderte Fluid gezielt an bestimmte Orte im Inneren des Getriebes geführt wird. Besonders bevorzugt ist es, wenn das Öl zumindest zum Teil gezielt an eine Innenwandung des Gehäuses geführt wird, so dass das Fluid hierdurch abgekühlt werden kann.

Über die Rinne kann hochgeschleudertes und herabtropfendes Fluid aufgenommen werden, und zwar insbesondere temporär aufgenommen werden, um auf diese Weise den Fluidhaushalt zu beeinflussen. Durch die Möglichkeit, das aufgenommene Fluid über die Rinne in axialer Richtung zu leiten, kann das Fluid zudem gezielt an solche Orte geführt werden, an denen der Fluidbedarf am größten ist. Insbesondere kann Fluid hierbei zumindest zum Teil auf eine Gehäusewandung im Inneren des Gehäuses eines Getriebes geführt werden, um das Fluid gezielt abzukühlen.

Alternativ kann die Rinne jedoch auch dazu ausgebildet sein, Fluid lediglich temporär aufzunehmen, bis ein Überlauf in axialer Richtung oder radialer Richtung erfolgt, so dass die Rinne in diesem Fall nicht die Funktion oder Ausbildung hat, das aufgenommene Fluid in axialer Richtung zu leiten.

Von besonderem Vorzug ist es, wenn die Fluidführungsvorrichtung mehrere, axial versetzt angeordnete Fluidspaltoberflächen aufweist, die in diesem Fall vorzugsweise jeweils unterschiedlich, an das jeweilige Zahnrad angepasste Durchmesser besitzen.

Die Fluidführungsvorrichtung kann insgesamt als sich längserstreckende Wanne gebildet sein, die an ihren Längsenden offen oder geschlossen ist. Im Falle von offenen Längsenden können die Längsenden mit Mitteln versehen sein, um die Wannen an sich radial erstreckenden Wänden des Getriebegehäuses festzulegen, insbesondere auch über Dichtungen, die vorzugsweise als Labyrinthdichtungen ausgebildet sind. Jede der Fluidspaltoberflächen kann dabei durch eine kreisbogenförmige Schale gebildet sein, wobei die Schale als Wand ausgebildet sein kann, als Massivbauteil oder auch als Hohlbauteil.

Die sich axial erstreckende Rinne erstreckt sich in Längsrichtung vorzugsweise über die axiale Länge einer Fluidspaltoberfläche, insbesondere über die Länge von wenigstens 1,5 Fluidspaltoberflächen, insbesondere über die axiale Länge von wenigstens zwei Fluidspaltoberflächen. Ein Boden der Rinne liegt vorzugsweise oberhalb eines tiefsten Punktes der der Rinne zugeordneten Fluidspaltoberflächen. Vorzugsweise liegt der Boden der Rinne oberhalb der Längsachse, die die Fluidspaltoberflächen definiert.

Sofern die Fluidführungsvorrichtung generell die Form einer Wanne hat, die entlang einer Längsachse ausgerichtet ist, so ist die Rinne vorzugsweise im Bereich von wenigstens einem Umfangsrand der Wanne angeordnet.

Sämtliche nachstehenden Angaben zu Höhen oder Winkeln beziehen sich auf eine normale Einbaulage der Fluidführungsvorrichtung in dem Getriebe, wobei das Getriebe in einem Kraftfahrzeug montiert ist, das auf einer Ebene steht. Neigungswinkel des Fahrzeugs um eine Nickachse, eine Gierachse oder eine Rollachse sollen hierbei unberücksichtigt bleiben.

Die obige Aufgabe wird ferner gemäß dem ersten Aspekt gelöst durch ein Kraftfahrzeuggetriebe mit einem Gehäuse, innerhalb dessen eine Welle drehbar gelagert ist, an der wenigstens zwei Zahnräder axial versetzt zueinander gelagert sind, wobei in dem Gehäuse und unterhalb der Zahnräder eine Fluidführungsvorrichtung der oben bezeichneten Art aufgenommen ist.

Die Fluidführungsvorrichtung weist in diesem Fall die Funktion eines Verdrängungskörpers auf, weist jedoch auch die Funktion auf, Fluid gezielt an bestimmte Orte zu führen, insbesondere hin zu Gehäusewänden zur Kühlung und/oder an Zahnradeingriffsbereiche etc.

Durch die Verminderung der für den Betrieb des Getriebes notwendigen Fluidmenge, können sich Kostenvorteile und Gewichtsvorteile ergeben, sowie geringere Befüllungszeiten. Ferner können Plantschverluste reduziert werden. Auch ist es in manchen Fällen möglich, die C02-Belastung, die mit dem Getriebe einhergeht, sowie die Temperatur des Fluides zu reduzieren. Die Fluidführungsvorrichtung kann so in das Getriebegehäuse eingebaut sein, dass sie darin stabil gehalten ist und/oder einen stabilisierenden Einfluss auf das Gehäuse besitzt. In diesem Fall kann das Gehäuse ggf. leichter und/oder kompakter ausgebildet werden. Auch dies kann zu Wirkungsgradverbesserungen führen.

Das Getriebe ist vorzugsweise für eine Tauchschmierung ausgelegt und nicht für eine Einspritzschmierung. Einzelne Komponenten können jedoch ggf. auch einspritzgeschmiert sein, vorzugsweise nicht jedoch der Zahneingriff zwischen Zahnrädern des Getriebes.

Gemäß einem weiteren Aspekt wird die obige Aufgabe gelöst durch ein Kraftfahrzeuggetriebe, das vorzugsweise gemäß dem ersten Aspekt ausgebildet ist, wobei das Kraftfahrzeuggetriebe gemäß dem weiteren Aspekt ein Gehäuse aufweist, innerhalb dessen eine Getriebewelle drehbar gelagert ist, an der wenigstens zwei Gang-Zahnräder von Radsätzen zur Einrichtung jeweiliger Gangstufen axial versetzt zueinander gelagert sind, wobei innerhalb des Gehäuses ferner ein Differential angeordnet ist, das um eine zu der Getriebewelle parallel versetzte Differentialachse drehbar gelagert ist und mittels dessen Antriebsleistung verteilbar ist, wobei das Differential ein Differentialzahnrad aufweist, das in einen Fluidsumpf des Gehäuses reicht, und wobei in dem Innenraum des Gehäuses eine Differential-Fluidführungsvorrichtung angeordnet ist, mittels der von dem Differentialzahnrad im Betrieb hochgeschleudertes und von der Differential-Führungsvorrichtung aufgefangenes Fluid in einer Richtung quer zu der Differentialachse geführt wird.

Während die in Bezug auf den ersten Aspekt beschriebene Fluidführungsvorrichtung eine Radsatz-Fluidführungsvorrichtung ist, die mehreren Radsätzen eines Kraftfahrzeuggetriebes zugeordnet ist, die zum Ein- und Auslegen von Gangstufen des Kraftfahrzeuges dienen, richtet sich der weitere Aspekt auf ein Kraftfahrzeuggetriebe, innerhalb dessen eine Differential-Fluidführungsvorrichtung vorgesehen ist. Die Differential-Fluidführungsvorrichtung ist insbesondere dazu ausgelegt, aufgefangenes Fluid in einer Richtung quer zu der Differentialachse zu führen. Dies kann entweder zu dem Zweck geschehen, das hochgeschleuderte Fluid wieder einem Fluidsumpf zuzuführen. In anderen Fällen kann dies jedoch auch dazu dienen, das Fluid anderen Bereichen im Inneren des Gehäuses zuzuführen.

Das Differentialzahnrad ist vorzugsweise jenes Zahnrad, das am tiefsten in einen Fluidsumpf eintaucht. Die Differential-Fluidführungsvorrichtung ist dabei insbesondere dazu ausgebildet, Planschverluste aufgrund des Eintauchens des Differentialzahnrades in den Fluidsumpf zu verringern. Dies kann bspw. durch einen Differential-Verdrängungskörper erfolgen, der unterhalb des Differentialzahnrades angeordnet ist.

Sofern die Differential-Fluidführungsvorrichtung dazu ausgelegt ist, das aufgefangene Fluid in Richtung hin zu anderen Getriebebauteilen zu leiten, bspw. hin zu Gang-Radsätzen oder zumindest in Richtung einer Getriebewelle, an der wenigstens zwei Gang-Zahnräder axial versetzt zueinander angeordnet sind, kann das in dem Gehäuse enthaltene Fluid bei längerem Fahrzeugstand von einem Getriebegehäuseabschnitt des Gehäuses hin zu einem Differentialgehäuseabschnitt abfließen. Mit Anlaufen des Getriebes wird das aufgefangene Fluid dann zum einen vorzugsweise so geführt, dass Planschverluste im Bereich des Differentialzahnrades vermieden werden. Zum anderen kann das aufgefangene Fluid bei Betriebsstart dann hin zu dem Getriebegehäuseabschnitt des Getriebes geführt werden, um eine optimale Schmierung/Kühlung zu gewährleisten.

Das Differentialzahnrad kann im Bereich eines Einganges des Kraftfahrzeuggetriebes angeordnet sein, also bspw. in axialer Richtung zwischen Gangradsätzen und einer Kupplungsanordnung. Das Differentialzahnrad kann jedoch auch an dem einer Kupplungsanordnung gegenüberliegenden axialen Ende des Kraftfahrzeuggetriebes angeordnet sein.

Die Aufgabe wird somit vollkommen gelöst.

Gemäß einer besonders bevorzugten Ausführungsform des ersten Aspekts weist die Rinne einen radialen Fluidüberlauf hin zu einer Fluidspaltoberfläche auf.

Durch diese Maßnahme kann Fluid, das in der Rinne aufgenommen wird, radial direkt in den Bereich des Fluidspaltes geführt werden, um von dort im Betrieb unmittelbar von einem Zahnrad mitgenommen zu werden, so dass es wiederum zu Schmierzwecken dienen kann.

Die Fließrichtung kann folglich radial nach innen hin zu der Fluidspaltoberfläche erfolgen, in welchem Fall ein Rand der Rinne radial außen höher ist als radial innen.

Erfindungsgemäß weist die Rinne wenigstens einen axialen Abfluss auf.

Ein derartiger axialer Abfluss ist insbesondere dann vorteilhaft, wenn die Rinne dazu ausgelegt, aufgenommenes Fluid in axialer Richtung zu leiten. In diesem Fall kann das Fluid gezielt an einen axialen Ort des Abflusses geführt werden.

Der Abfluss kann durch ein offenes Ende an einem Längsende der Rinne gebildet sein, kann jedoch auch durch eine Durchbrechung im Boden der Rinne gebildet sein. Der axiale Abfluss kann hin zu einer Gehäusewandung erfolgen, oder auch hin zu der Fluidspaltoberfläche.

Erfindungsgemäß ist die Rinne gegenüber der Längsachse geneigt, so dass darin aufgenommenes Fluid hin zu dem axialen Abfluss fließt.

Gemäß einer weiteren bevorzugten Ausführungsform weist die Fluidführungsvorrichtung ein erstes Längsende und ein zweites Längsende auf, die vorzugsweise im Bereich von Gehäusewänden eines Getriebegehäuses angeordnet werden können, wobei die Rinne so ausgestaltet ist, dass darin aufgenommenes Fluid in Richtung von einem der Längsenden hin zu einem Bereich dazwischen fließt.

Durch diese Maßnahme kann das Fluid hin zu einem zentralen Bereich zwischen den Längsenden geführt werden. Es wird folglich erreicht, dass das Fluid in jene Längsbereiche innerhalb des Gehäuses geführt werden kann, an denen der Fluidbedarf am größten ist.

Gemäß einer weiteren bevorzugten Ausführungsform weist die Fluidführungsvorrichtung ein erstes Längsende und ein zweites Längsende auf, wobei eine erste Rinne im Bereich von dem ersten Längsende angeordnet ist und wobei eine zweite Rinne im Bereich von dem zweiten Längsende angeordnet ist.

Durch diese Maßnahme kann ein axiales Führen von Fluid an beiden Längsenden der Fluidführungsvorrichtung realisiert werden.

Vorzugsweise erstrecken sich die Rinnen dabei jeweils von dem jeweiligen Längsende zur Mitte hin. Die Rinnen sind vorzugsweise im Bereich von Umfangsrändern der Fluidführungsvorrichtung angeordnet, und zwar vorzugsweise an in Querrichtung gegenüberliegenden Umfangsrändern.

Erfindungsgemäß ist die Fluidführungsvorrichtung durch einen wannenförmigen Basiskörper gebildet.

Hierbei ist die Fluidführungsvorrichtung folglich vorzugsweise als ein einstückiges Bauteil realisiert. Der Basiskörper ist vorzugsweise aus einem Kunststoffmaterial hergestellt, könnte jedoch auch aus Metall hergestellt sein. Der Basiskörper ist im Querschnitt kreisbogenförmig, insbesondere etwa halbrund ausgebildet. Erfindungsgemäß weist der Basiskörper an seiner Innenseite eine Mehrzahl von Fluidspaltoberflächen auf, wobei der Basiskörper von Fluidspaltoberfläche zu Fluidspaltoberfläche gestuft ausgebildet ist. Im Bereich von Längsenden des Basiskörpers sind vorzugsweise Gehäuseverbindungsflansche oder -vorsprünge ausgebildet, so dass der Basiskörper zwischen zwei sich radial erstreckenden Flächen eines Getriebegehäuses angeordnet werden kann.

Erfindungsgemäß ist der Basiskörper dabei im Bereich von wenigstens einer Fluidspaltoberfläche einschalig ausgebildet und ist im Bereich von wenigstens einer Fluidspaltoberfläche mehrschalig ausgebildet, so dass im letzteren Fall ein geschlossenes Verdrängungsvolumen gebildet ist. Durch die mehrschalige Ausbildung kann in diesem Bereich ein Hohlraum realisiert werden.

Der Hohlraum kann als geschlossener Hohlraum ausgebildet sein, der im Wesentlichen zur Verdrängung von Fluid in dem Gehäuse führt. Der Hohlraum kann jedoch auch als offener Hohlraum ausgebildet sein, durch den Fluid hindurchströmen kann. In dem Hohlraum können Mittel zur Kühlung von Fluid angeordnet sein, wie bspw. Granulate. Ferner kann Wärme in solchen Werkstoffen gespeichert werden. Auch können in einem solchen Hohlraum enthaltene Materialien zur Geräuschdämmung verwendet werden.

Vorzugsweise wird der Basiskörper in einem Spritzgussverfahren hergestellt, und ist vorzugsweise aus einem einzigen Material hergestellt, insbesondere einem wärmebeständigen Kunststoffmaterial.

Insgesamt ist es ferner bevorzugt, wenn die Rinne nach oben hin offen ist oder nach oben hin zumindest teilweise durch Durchflussbegrenzungsmittel abgedeckt ist.

Solche Durchflussbegrenzungsmittel können im Innenraum des Getriebes generell vorgesehen sein, um hochgeschleudertes Fluid zunächst aufzufangen und dann verzögert oder mit einer niedrigen Durchflussrate abzugeben. Derartige Konzepte sind bspw. dem Grunde nach in dem eingangs genannten Dokument DE 10 2006 022 964 A1 beschrieben. Die Durchflussbegrenzungsmittel dienen insbesondere dazu, kaltes und zähflüssiges Fluid aufzuhalten, um den Wirkungsgrad des Getriebes bei kaltem Fluid zu verbessern.

Die Rinne, oder wenn mehrere Rinnen vorgesehen sind, wenigstens eine Rinne, kann ebenfalls durch solche Durchflussbegrenzungsmittel abgedeckt sein. In diesem Fall wird insbesondere zähflüssiges Fluid nicht in der Rinne aufgenommen, sondern fließt an dem vorzugsweise schräg angeordneten Durchflussbegrenzungsmittel nach unten hin zu einer Fluidspaltoberfläche, um auf diese Weise unmittelbar wieder zur Schmierung beitragen zu können.

Ferner ist es gemäß einer erfinderischen Ausführungsform vorgesehen, dass wenigstens eine kreisbogenförmige Innenfläche der Fluidführungsvorrichtung an wenigstens einem Umfangsende in einen Schrägabfluss übergeht, von dem aus Fluid direkt in Richtung radial nach außen geleitet wird, insbesondere zum Gehäuse hin.

Die Fluidführungsvorrichtung kann neben der kreisbogenförmigen Fluidspaltoberfläche, die einen Zahnrad zugeordnet ist (oder mehreren Fluidspaltoberflächen, die jeweiligen Zahnrädern zugeordnet sind) auch weitere kreisbogenförmige Innenflächen aufweisen, die bspw. zur Aufnahme von Naben-Elementen, zur Aufnahme von Schaltkupplungsanordnungen etc. dienen. In diesem Bereich ergibt sich in manchen Fällen keine Umfangsbewegung zwischen der Innenfläche und dem darin aufgenommenen Element, so dass es in diesem Fall bevorzugt sein kann, wenn Fluid nicht in Richtung hin zu der Innenfläche geführt wird, sondern radial nach außen in Richtung hin zu einem Gehäuse.

Gemäß einer weiteren bevorzugten Ausführungsform hat eine Fluidspaltoberfläche im Bereich eines tiefsten Punktes eine Verbindung mit einer Unterseite der Fluidführungsvorrichtung. Durch diese Maßnahme ist gewährleistet, dass an einer Gehäusewand abfließendes Fluid, das in den Fluidsumpf strömt, zu einer Erhöhung des Fluidniveaus im Fluidsumpf führt, was wiederum dazu führt, dass Fluid vorzugsweise von der Unterseite der Fluidführungsvorrichtung, also vom Fluidsumpf, nach oben durch die Verbindung hindurch hin zu der Fluidspaltoberfläche gedrückt wird, um dafür zu sorgen, dass Fluid nachgeführt wird, das von dem zugeordneten Zahnrad dann wieder zu Schmierungs- und/oder Kühlungszwecken mitgenommen werden kann.

Die Verbindung mit der Unterseite der Fluidführungsvorrichtung kann entweder dadurch realisiert werden, dass ein tiefster Punkt der Fluidspaltoberfläche benachbart zu einem Längsende der Fluidspaltoberfläche ist. Ferner kann die Verbindung im Bereich eines Übergangs zwischen zwei Fluidspaltoberflächen erfolgen. Besonders bevorzugt ist es, wenn die Verbindung mit der Unterseite der Fluidführungsvorrichtung durch eine Bohrung eingerichtet ist, die zwischen zwei Längsenden der jeweiligen Fluidspaltoberfläche eingerichtet ist.

In allen Fällen ist es bevorzugt, wenn ein Fluidsumpfniveau in einem Ruhezustand des Getriebes bzw. des Kraftfahrzeuges, d.h. ein Ruheniveau, oberhalb von wenigstens einem und insbesondere oberhalb von sämtlichen tiefsten Punkten der Fluidspaltoberflächen der Fluidführungsvorrichtung liegt.

Insgesamt wird mit der vorliegenden Erfindung je nach Ausführungsform und Aspekt der Erfindung wenigstens einer der folgenden Vorteile erzielt. Durch eine Verbindung zwischen der Fluidspaltoberfläche und der Unterseite der Fluidführungsvorrichtung kann eine Regulierung des Fluidzulaufes in den Plantschbereich hinein erfolgen, so dass Plantschverluste vermindert werden können. Ferner kann eine zwanghafte bzw. gezielte Leitung von Fluid an eine Gehäusewandung erfolgen, so dass das Öl durch Nutzung der Gehäusestruktur optimal gekühlt werden kann. Auch dies kann dazu beitragen, dass insgesamt ein geringeres Volumen an Fluid für den Betrieb eines Getriebes notwendig ist.

Durch den bei der Fluidführungsvorrichtung vorgesehenen Rinnenbereich, der eine Art Napfkontur ist, kann Spritzfluid dort hinein gelangen, da diese Rinne bzw. dieser Napf nach oben hin geöffnet ist. Demzufolge dient die Rinne zur Regulierung des Fluidniveaus. Durch die Form, die Neigung und sonstige Parameter der Rinne kann Fluid gezielt in andere Bereiche geleitet werden, entweder in axialer Richtung oder auch in radialer Richtung (bspw. durch Überlaufen).

Abflüsse von der Rinne können hin zu einem Gehäuse oder unmittelbar zu einem Fluidsumpf führen. Alternativ ist es möglich, wenigstens einen Abfluss einer Rinne über ein Rohr direkt mit einem Fluidsumpf zu verbinden.

Ein Abfluss einer Rinne kann auch in einen Hohlraum der Fluidführungsvorrichtung hinein erfolgen, wobei der Hohlraum dann vorzugsweise mit einer Verbindung hin zu einer Fluidspaltoberfläche ausgestattet ist und/oder mit einer Verbindung hin zu einem Fluidsumpf, d.h. einer Unterseite der Fluidführungsvorrichtung.

Insgesamt können Konturen, Kanäle und Zugänge der Fluidführungsvorrichtung so ausgebildet sein, dass sie einen Fluidzulauf in dem Plantschbereich regulieren, wobei Kanten und/oder Konturen so ausgestaltet sind, dass ein gezielter Fluidstrom entsteht. Dies hat zum Ergebnis, dass Fluid zwanghaft und gezielt in Richtung einer Gehäusewand geleitet werden kann, oder in andere Bereiche.

Die Fluidführungsvorrichtung ist vorzugsweise durch einen einstückigen Basiskörper gebildet. Dieser wiederum kann aus mehreren Teilen durch geeignete, vorzugsweise unlösbare Verbindungstechniken wie Kleben, Schweißen oder Ähnliches zu dem Basiskörper verbunden sein.

Gemäß einer bevorzugten Ausführungsform des zweiten Aspektes weist die Differential-Fluidführungsvorrichtung einen Differentialverdrängungskörper auf, der unterhalb des Differentialzahnrades angeordnet ist und mit diesem einen Differential-Fluidspalt bildet.

Durch diese Maßnahme kann der Fluidspalt im Betrieb weitgehend freigeräumt werden, um auf diese Weise Planschverluste zu vermeiden. Fluid kann im Idealfall in Richtung hin zu dem Fluidspalt entweder in axialer Richtung strömen oder aber in radialer Richtung, bspw. durch eine radiale Öffnung in dem Differential-Verdrängungskörper.

Der Differential-Verdrängungskörper kann in manchen Ausführungsformen einstückig mit einem Basiskörper einer Radsatz-Fluidführungsvorrichtung gemäß dem ersten Aspekt ausgebildet sein.

Die axiale Länge des Differential-Verdrängungskörpers kann der axialen Breite des Differentialzahnrades entsprechen. Der Differential-Verdrängungskörper ist vorzugsweise axial kürzer als ein Basiskörper einer Radsatz-Fluidführungsvorrichtung.

Die Ausgestaltung eines Kraftfahrzeuggetriebes mit einem Differential innerhalb eines Gehäuses, innerhalb dessen auch eine Getriebewelle mit Gang-Zahnrädern angeordnet ist, und mit der weiteren Ausgestaltung, dass unterhalb des Differentialzahnrades ein Differential-Verdrängungskörper angeordnet ist, ist vorliegend unabhängig von einer Fluidführungsfunktion in einer Richtung quer zu der Differentialachse als eigene Erfindung anzusehen.

Gemäß einer weiteren bevorzugten Ausführungsform des zweiten Aspektes des Kraftfahrzeuggetriebes weist die Differential-Fluidführungsvorrichtung eine Querrinne auf, mittels der das aufgefangene Fluid quer zu der Differentialachse geführt wird, wobei die Querrinne Bestandteil eines Differential-Verdrängungskörpers ist und/oder an einer Innenwand des Gehäuses befestigt ist.

Im Falle der Ausgestaltung einer Querrinne an dem Differential-Verdrängungskörper kann die Querrinne in axialer Richtung seitlich neben dem Differentialrad angeordnet sein. Es kann eine einzelne Querrinne an dem Differential-Verdrängungskörper ausgebildet sein, und zwar auf einer axialen Seite des Differentialrades, oder können zwei solche Rinnen auf den gegenüberliegenden axialen Seiten des Differentialrades angeordnet sein. In diesem Fall ist an einer Innenwand des Gehäuses vorzugsweise eine Leitvorrichtung vorgesehen, die dafür sorgt, dass vom Differentialrad hochgeschleudertes Fluid in die Querrinne gelangt.

In einer weiteren Ausgestaltung kann eine solche Querrinne auch an der Innenwand des Gehäuses befestigt sein, derart, dass gegen die Innenwand hochgeschleudertes Fluid von einer solchen Querrinne aufgefangen wird und dann in der Richtung quer zu der Differentialachse geführt wird, und zwar vorzugsweise in Richtung quer zur Differentialachse hin zu Radsätzen des Kraftfahrzeuggetriebes.

Gemäß einer weiteren bevorzugten Ausführungsform sind die Differential-Fluidführungsvorrichtung gemäß dem weiteren Aspekt und eine Radsatz-Fluidführungsvorrichtung gemäß dem ersten Aspekt, die eine sich axial erstreckende Rinne aufweist und gemäß dem ersten Aspekt ausgebildet ist, so in Bezug zueinander in dem Gehäuse angeordnet, dass von der Differential-Fluidführungsvorrichtung quer zu der Differentialachse geführtes Fluid zumindest teilweise in die Rinne der Radsatz-Fluidführungsvorrichtung leitbar ist, um das Fluid von dort aus in axialer Richtung weg von dem Differential zu führen.

Mit anderen Worten ermöglicht diese relative Anordnung einer Differential-Fluidführungsvorrichtung mit einer Radsatz-Fluidführungsvorrichtung, dass von dem Differentialzahnrad hochgeschleudertes Fluid letztlich in Richtung quer zu der Differentialachse hin zu der Radsatz-Fluidführungsvorrichtung geführt wird. Mittels der axialen Rinne der Radsatz-Fluidführungs-vorrichtung kann das Fluid dann in axialer Richtung geleitet werden, und zwar vorzugsweise weg von dem Differentialzahnrad hin zu bspw. einem mittleren Bereich einer Getriebewelle.

Die Differential-Fluidführungsvorrichtung kann integral mit der Radsatz-Fluidführungsvorrichtung ausgebildet sein. Ferner kann die Radsatz-Fluidführungs-vorrichtung Merkmale wie die Radsatz-Fluidführungsvorrichtung beinhalten, insbesondere hinsichtlich des radialen Fluidüberlaufes hin zu einem Differential-Fluidspalt, hinsichtlich eines radialen Abflusses aus einer Querrinne, insbesondere in einem Bereich von einem Längsende einer solchen Querrinne, hinsichtlich der Wannenform eines Verdrängungskörpers, hinsichtlich der Einschaligkeit oder Mehrschaligkeit eines solches Verdrängungskörpers, hinsichtlich der Frage, ob eine Querrinne nach oben hin offen ist oder zumindest teilweise über Durchzugsbegrenzungsmittel abgedeckt ist, hinsichtlich der Möglichkeit, Fluid direkt radial nach außen in Richtung hin zu einer Gehäuseinnenwand zu leiten, und/oder hinsichtlich der Maßnahme, eine Fluidspaltoberfläche im Bereich eines Differential-Fluidspaltes im Bereich eines tiefsten Punktes mit der Unterseite eines solchen

Differential-Verdrängungskörpers zu verbinden, derart, dass Fluid aus dem Fluidsumpf radial nach oben in Richtung hin zu dem Differential-Fluidspalt strömen kann.

Die Fluidführungsvorrichtung gemäß dem ersten und/oder dem zweiten Aspekt kann auch als Fluidmanagementvorrichtung bezeichnet werden. Denn diese kann das Schmieren von Getriebebestandteilen beeinflussen, das Kühlen von Getriebebestandteilen und/oder des Fluides darin, kann Plantschverluste verringern, wobei ein Abstreifen im Ölspalt erfolgt. Ferner kann die Temperaturabhängigkeit verringert werden, so dass bedarfsgerechtes Zuführen von Fluid ermöglicht wird. Das Ölvolumen (die Füllmenge) kann insgesamt minimiert werden. Ferner können Ölführungsaufgaben im Sinne von Zuführen zu bestimmten Bereichen realisiert werden. Das Getriebegehäuse ist vorzugsweise ein luftgekühltes oder mantelgekühltes Getriebegehäuse, so dass von innen an das Getriebegehäuse gespritztes Fluid gekühlt wird. Das Getriebe kann ein manuelles Schaltgetriebe für ein Kraftfahrzeug sein, kann jedoch auch ein automatisiertes Schaltgetriebe oder ein Doppelkupplungsgetriebe sein.

Das Getriebe ist vorzugsweise für den Längs- oder Quereinbau in einem Kraftfahrzeug ausgelegt, wobei eine Längsachse der Fluidführungsvorrichtung vorzugsweise mit einer Vorgelegewelle zusammenfällt.

Vorliegend ist der Begriff einer Rinne breit zu verstehen. Eine Rinne ist generell als eine längliche Anordnung zu verstehen, die dazu ausgebildet ist, dass ein Fluid entlang der axialen Erstreckung der Rinne strömen kann, und ist vorzugsweise geneigt. Der Querschnitt einer solchen Rinne kann rundlich sein, kann jedoch auch eckig sein.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
Fig. 1 eine perspektivische Ansicht einer ersten Ausführungsform einer erfindungsgemäßen Fluidführungsvorrichtung;
Fig. 2 eine weitere perspektivische Ansicht der Fluidführungsvorrichtung der Fig. 1;
Fig. 3 eine erste Seitenansicht der Fluidführungsvorrichtung der Fig. 1;
Fig. 4 eine zweite Seitenansicht der Fluidführungsvorrichtung der Fig. 1;
Fig. 5 eine Draufsicht auf die Fluidführungsvorrichtung der Fig. 1 in Verbindung mit einer schematischen Darstellung eines Kraftfahrzeuggetriebes;
Fig. 6 eine Schnittansicht entlang der Linie VI-VI der Fig. 5;
Fig. 7 eine Schnittansicht entlang der Linie VII-VII der Fig. 5;
Fig. 8 eine Schnittansicht entlang der Linie VIII-VIII der Fig. 5;
Fig. 9 eine Schnittansicht entlang der Linie IX-IX der Fig. 5;
Fig. 10 eine Schnittansicht entlang der Linie X-X der Fig. 5;
Fig. 11 eine schematische Querschnittsansicht durch eine weitere Ausführungsform einer erfindungsgemäßen Fluidführungsvorrichtung;
Fig. 12 eine schematische Querschnittsansicht durch eine weitere Ausführungsform einer erfindungsgemäßen Fluidführungsvorrichtung;
Fig. 13 eine schematische Querschnittsansicht durch eine weitere Ausführungsform einer erfindungsgemäßen Fluidführungsvorrichtung;
Fig. 14 eine schematische Querschnittsansicht durch eine weitere Ausführungsform einer erfindungsgemäßen Fluidführungsvorrichtung;
Fig. 15 eine schematische perspektivische Ansicht eines Kraftfahrzeuggetriebes gemäß dem zweiten Aspekt der Erfindung mit einer Differential- Fluidführungsvorrichtung;
Fig. 16 eine schematische Querschnittsansicht durch ein Kraftfahrzeuggetriebe gemäß dem zweiten Aspekt der Erfindung; und
Fig. 17 eine schematische Draufsicht auf den Innenraum eines Kraftfahrzeuggetriebes gemäß dem zweiten Aspekt der Erfindung.

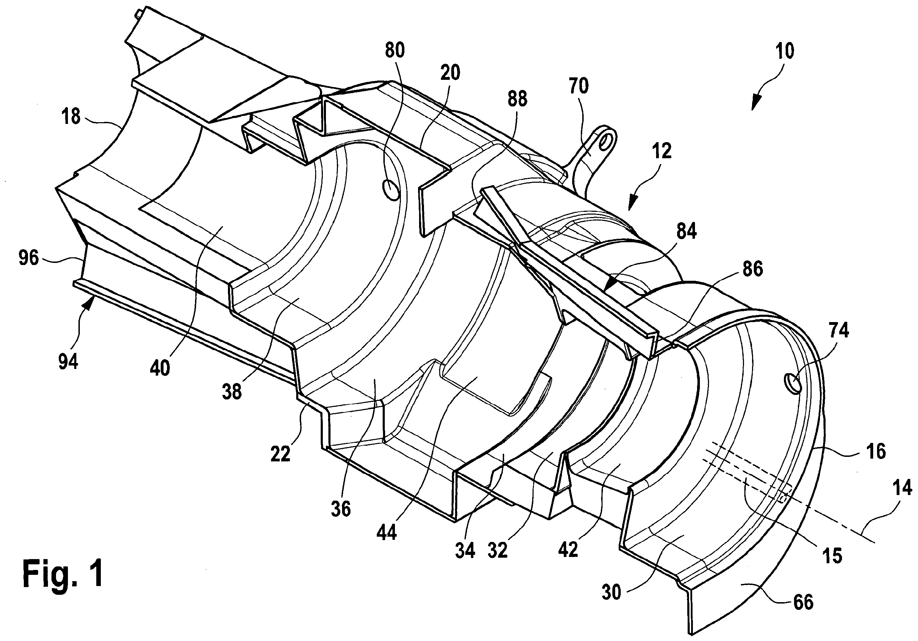

In den Figuren 1 bis 10 ist eine erste Ausführungsform einer Fluidführungsvorrichtung gemäß dem ersten Aspekt dargestellt und generell mit 10 bezeichnet. Die Fluidführungsvorrichtung 10 weist einen Basiskörper 12 auf, der als einstückiger Kunststoffkörper ausgebildet ist. Der Basiskörper kann bspw. durch Spritzgießen von zwei oder mehr Teilen und anschließendes Verbinden (bspw. Kleben oder thermoplastisches Schweißen) der Teile hergestellt sein.

Die Fluidführungsvorrichtung 10 ist entlang einer Längsachse 14 ausgerichtet, die vorzugsweise mit einer Welle wie einer Vorgelegewelle 15 eines Getriebes zusammenfällt. Der Basiskörper 12 weist ein erstes Längsende 16 und ein zweites Längsende 18 auf. Ferner ist der Basiskörper 12 wannenförmig um die Längsachse 14 herum ausgebildet und weist einen ersten sich generell in axialer Richtung erstreckenden Umfangsrand 20 und einen radial gegenüberliegenden, sich ebenfalls im Wesentlichen axial erstreckenden zweiten Umfangsrand 22 auf.

Ausgehend von dem ersten Längsende 16 weist der Basiskörper 12 an seiner zur Längsachse 14 hinweisenden Innenfläche eine Mehrzahl von Fluidspaltoberflächen 30 auf, die jeweils im Querschnitt kreisbogenförmig ausgebildet sind und deren axiale Länge etwa der Länge eines Zahnrades entspricht, das an der Welle 15 drehbar gelagert oder festgelegt ist.

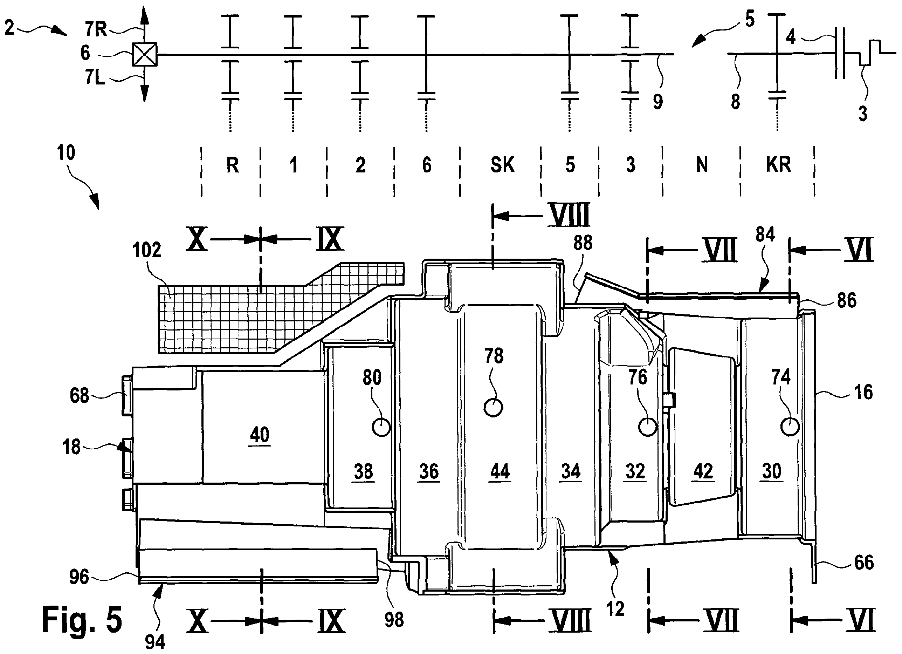

Fig. 5 zeigt in schematischer Form einen Antriebsstrang 2 für ein Kraftfahrzeug, wobei der Antriebsstrang 2 einen Antriebsmotor 3, eine Kupplungsanordnung 4, ein Getriebe 5 sowie ein Differential 6 aufweist, wobei das Differential 6 Leistung auf angetriebene Räder 7L, 7R verteilt.

Das Getriebe 8 weist eine Eingangswelle 8 sowie eine koaxial hierzu ausgerichtete Ausgangswelle 9 auf. Die Eingangswelle 8 ist über einen Konstanten-Radsatz KR mit einer in Fig. 5 nicht näher gezeigten Vorgelegewelle verbunden, die in Fig. 1 jedoch bei 15 schematisch dargestellt ist. Ferner sind zwischen der Vorgelegewelle 15 und der Ausgangswelle 9 eine Mehrzahl von Radsätzen angeordnet, die unterschiedlichen Gangstufen des Getriebes 5 zugeordnet sind.

Der Basiskörper 12 weist benachbart zu dem ersten Längsende 16 eine erste Fluidspaltoberfläche 30 auf, die einem Zahnrad des Konstanten-Radsatzes KR zugeordnet ist. Ferner beinhaltet der Basiskörper 12 eine zweite Fluidspaltoberfläche 32, die einem Zahnrad eines Radsatzes für die Gangstufe 3 zugeordnet ist, eine dritte Fluidspaltoberfläche 34, die einem Rad eines Radsatzes für die Gangstufe 5 zugeordnet ist, eine Fluidspaltoberfläche 36, die einem Rad eines Radsatzes für die Vorwärtsgangstufe 6 zugeordnet ist, eine fünfte Fluidspaltoberfläche 38, die einem Rad eines Radsatzes für die Vorwärtsgangstufe 2 zugeordnet ist, sowie eine sechste Fluidspaltoberfläche 40, die einem Radsatz für die Rückwärtsgangstufe R sowie einem Radsatz für die Vorwärtsgangstufe 1 zugeordnet ist. In axialer Richtung zwischen der ersten Fluidspaltoberfläche 30 und der zweiten Fluidspaltoberfläche 32 ist eine erste Zwischenoberfläche 42 ausgebildet, die bspw. zur Aufnahme einer Nabe oder dergleichen ausgebildet sein kann. Zwischen der dritten Fluidspaltoberfläche 34 und der vierten Fluidspaltoberfläche 36 ist eine zweite Zwischenoberfläche 44 ausgebildet, konzentrisch zu welcher ein Schaltkupplungspaket SK angeordnet sein kann, das bspw. den Vorwärtsgangstufen 5 und 6 zugeordnet ist.

Die Fluidspaltoberflächen 30-40 weisen jeweils unterschiedliche Radien auf, die an die Zahnräder der jeweiligen Radsätze für die jeweiligen Gangstufen angepasst sind, derart, dass zwischen den Zahnrädern und den Fluidspaltoberflächen jeweils ein relativ kleiner Fluidspalt verbleibt, wie es nachstehend noch erläutert werden wird.

Die Zwischenoberflächen 42, 44 sind ebenfalls kreisbogenförmig ausgebildet.

Der Basiskörper 12 ist in manchen Bereichen einschalig ausgebildet und in anderen Bereichen mehrschalig, worauf nachstehend noch eingegangen werden wird.

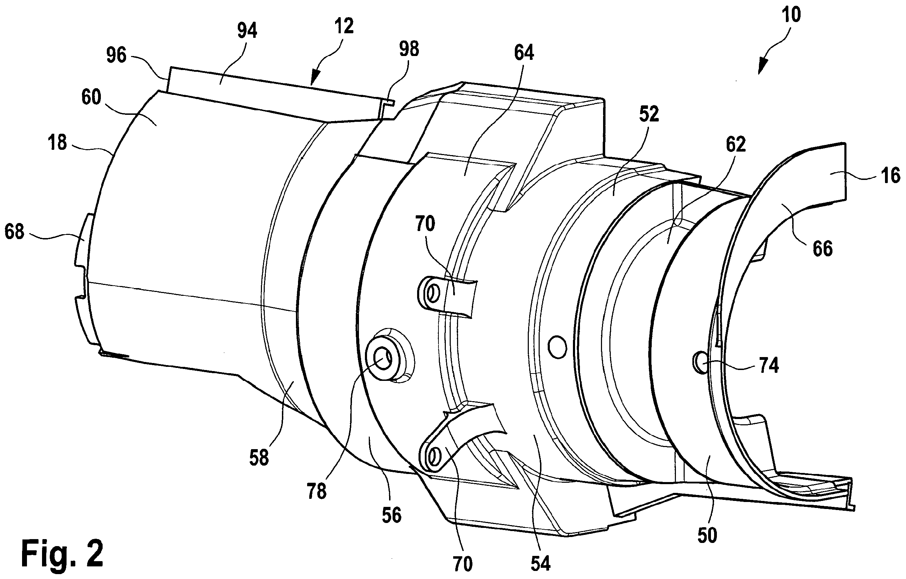

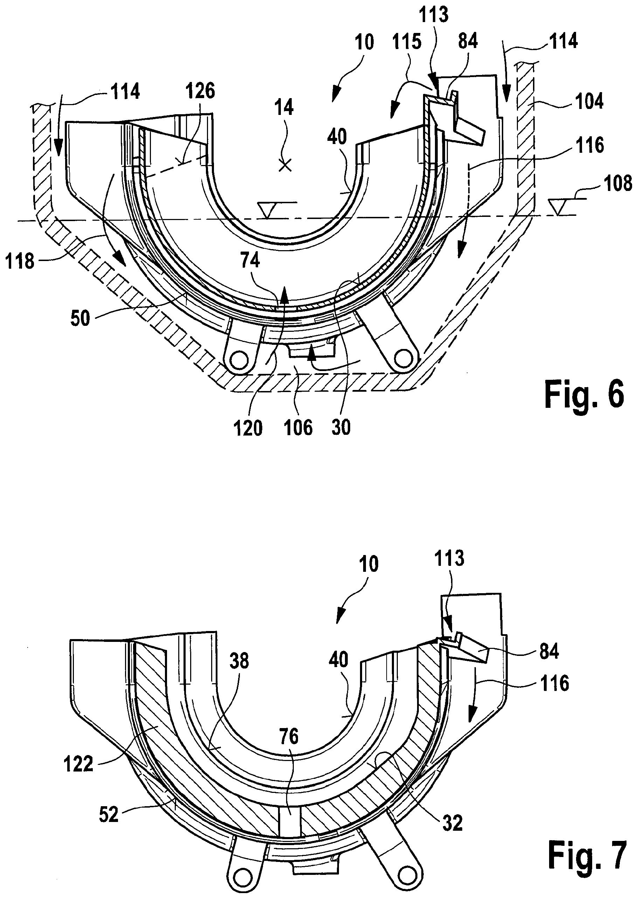

Im Bereich der ersten Fluidspaltoberfläche 30 ist der Basiskörper 12 einschalig ausgebildet, wie es auch in Fig. 6 zu sehen ist, wobei eine Außenseite des Basiskörpers 12 in diesem Bereich eine erste Fluidsumpfoberfläche 50 (siehe Fig. 2 und Fig. 6) besitzt, die ebenfalls kreisbogenförmig ausgebildet und dem Fluidsumpf innerhalb eines Getriebegehäuses zugewandt ist.

Im Bereich der zweiten Fluidspaltoberfläche 32 ist der Basiskörper 12 ein- oder mehrschalig ausgebildet. Wie es in Fig. 7 zu erkennen ist, kann der Basiskörper 12 in diesem Bereich relativ voluminös ausgebildet sein, kann jedoch auch als geschlossener Hohlraum ausgebildet sein. Im Falle eines Hohlraumes ist der Basiskörper 12 dann zweischalig ausgebildet. Am Außenumfang des Basiskörpers 12 ist in Zuordnung zu der zweiten Fluidspaltoberfläche 32 eine zweite Fluidsumpfoberfläche 52 ausgebildet, die ebenfalls kreisbogenförmig ausgebildet ist.

Weitere Fluidsumpfoberflächen 54, 56, 58, 60 sind den Fluidspaltoberflächen 34, 36, 38, 40 zugeordnet. Im Bereich der Fluidspaltoberfläche 40 kann der Basiskörper 12 wiederum entweder als voluminöser Körper (bspw. geschäumt oder dergleichen) oder als Hohlkörper, insbesondere als zweischaliger Hohlkörper mit einem geschlossenen Hohlraum ausgebildet sein. Die Hohlräume dienen in diesem Fall als Verdrängungsräume bzw. raumausgebildet, mittels dessen das in ein Getriebegehäuse eingefüllte Fluidvolumen verdrängt und folglich vom Niveau her angehoben werden kann.

In Zuordnung zu den Zwischenoberflächen 42, 44 weist der Basiskörper 12 an seiner Außenseite eine erste Zwischensumpfoberfläche 62 und eine zweite Zwischensumpfoberfläche 64 auf.

Der Basiskörper 12 ist folglich in Längsrichtung gesehen gestuft ausgebildet, wobei die jeweilige Fluidspaltoberflächen 30 den jeweiligen Zahnrädern zugeordnet sind. Es versteht sich dabei, dass die Fluidsumpfoberflächen 50 alternativ nicht kreisbogenförmig sondern polygonal oder auf eine sonstige Art und Weise angepasst an eine Innenfläche eines Gehäuses ausgebildet sein können.

Im Bereich des ersten Längsendes 16 weist der Basiskörper 12 einen ersten Gehäuseverbindungsflansch 66 auf, mittels dessen der Basiskörper 12 in Anlage an eine radiale Wand eines Gehäuses gebracht werden kann.

Im Bereich des zweiten Längsendes 18 weist der Basiskörper 12 eine Mehrzahl von Gehäuseverbindungsnasen 68 auf, die in axialer Richtung vorstehen und die bspw. in entsprechende Ausnehmungen in einer sich radial erstreckenden Gehäusewand eines Getriebegehäuses eingesetzt werden können, um den Basiskörper 12 daran zu positionieren.

Im Bereich der ersten Fluidspaltoberfläche 30 weist der Basiskörper 12 eine erste Fluidsumpfbohrung 74 auf, die die Fluidspaltoberfläche 30 mit der ersten Fluidsumpfoberfläche 50 verbindet, also als Durchgangsöffnung durch den Basiskörper 12 hindurch ausgebildet ist. In entsprechender Weise ist eine zweite Fluidsumpfbohrung 76 im Bereich der zweiten Fluidspaltoberfläche 32 vorgesehen. Eine dritte Fluidsumpfbohrung 78 ist im Bereich der zweiten Zwischenoberfläche 44 vorgesehen. Eine vierte Fluidsumpfbohrung 80 ist im Bereich der fünften Fluidspaltoberfläche 38 vorgesehen. Die Bohrungen 74-80 liegen vorzugsweise jeweils im tiefsten Bereich der zugeordneten Oberfläche.

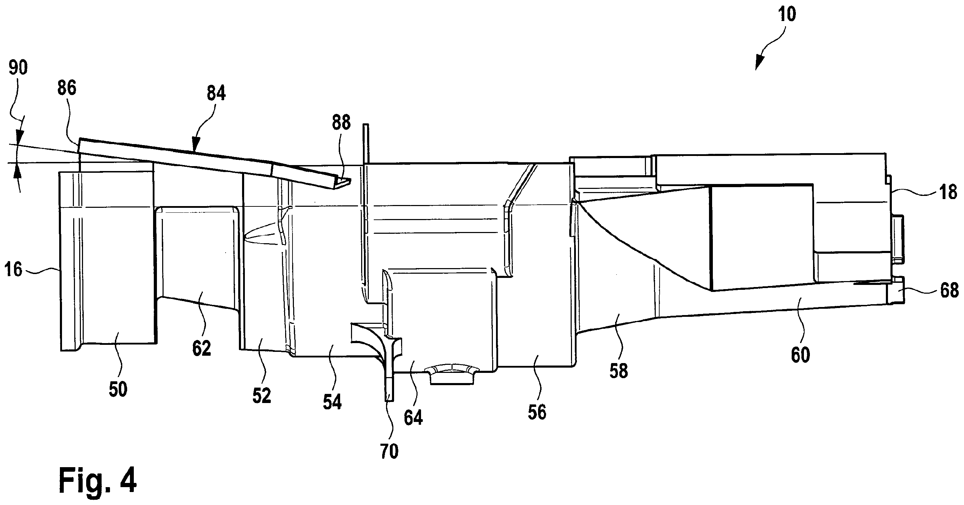

Im Bereich des ersten Umfangsrandes 20 weist der Basiskörper 12 eine erste Rinne 84 auf. Die erste Rinne 84 weist ein erstes axiales Rinnenende 86 und ein zweites axiales Rinnenende 88 auf. Das erste axiale Rinnenende 86 liegt dabei im Bereich des ersten Längsendes 16. Das zweite axiale Rinnenende 88 liegt in axialer Richtung etwa im Bereich der dritten Fluidspaltoberfläche 34. Die erste Rinne 84 ist gegenüber der Längsachse 14 um einen ersten Rinnenwinkel 90 geneigt, wie es in Fig. 4 zu sehen ist. Der erste Rinnenwinkel 90 kann bspw. im Bereich von 2° bis 15° liegen, insbesondere im Bereich von 3° bis 10°.

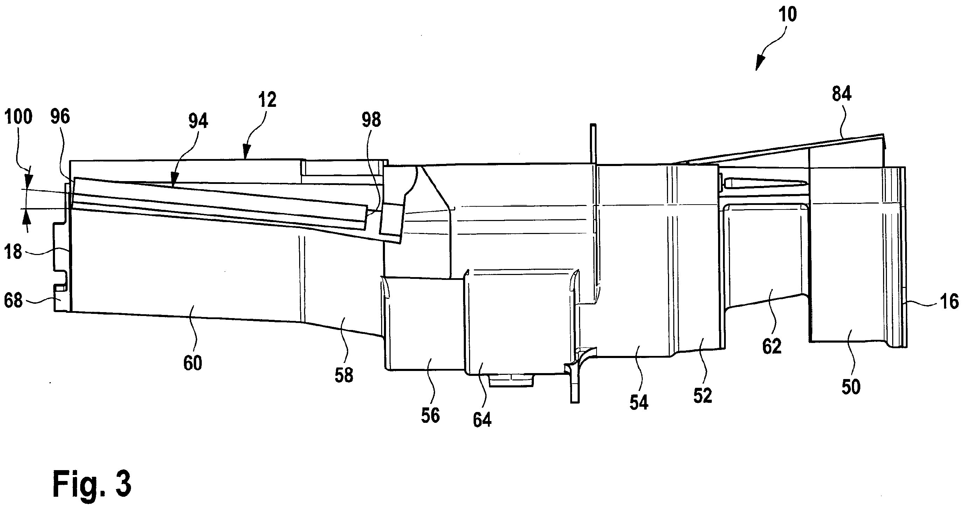

Ferner weist der Basiskörper 12 eine zweite Rinne 94 auf, die im Bereich des zweiten Umfangsrandes 22 angeordnet ist. Die zweite Rinne 94 weist ein erstes axiales Rinnenende 96 und ein zweites axiales Rinnenende 98 auf. Das erste axiale Rinnenende 96 ist im Bereich des zweiten Längsendes 18 angeordnet. Das zweite axiale Rinnenende 98 der zweiten Rinne 94 ist im Bereich der fünften Fluidspaltoberfläche 38 angeordnet. Die zweite Rinne 94 ist unter einem zweiten Rinnenwinkel 100 in Bezug auf die Längsachse 14 ausgerichtet, der in Fig. 3 dargestellt ist und der vom Betrag her einen ähnlichen Wert aufweisen kann wie der erste Rinnenwinkel 90. Die Rinnen 84, 94 sind dabei so geneigt, dass in den Rinnen aufgenommenes Fluid von den jeweiligen Längsenden 16, 18 hin zu der Mitte des Basiskörpers 12 fließen kann.

Die Rinnen 84, 94 sind jeweils höher angeordnet als die tiefsten Punkte der Fluidspaltoberflächen 30-40, und insbesondere höher als die Höhe der Längsachse 14. Die Rinnen 84, 94 sind im Bereich der Umfangsränder 20, 22 jeweils am Außenumfang angeordnet. Die jeweiligen zweiten Rinnenenden 88, 98, die im Bereich der dritten Fluidspaltoberfläche 34 bzw. der fünften Fluidspaltoberfläche 38 liegen, sind als axiale Abflüsse ausgebildet, von denen aufgenommenes Fluid nach unten in einem Bereich zwischen den Basiskörper 12 und einem Gehäuse des Getriebes abfließen kann. Ferner ist zumindest die erste Rinne 84 so ausgebildet, dass darin aufgenommenes Fluid ab einem gewissen Füllstand auch in radialer Richtung nach innen hin zu der ersten Fluidspaltoberfläche 30, der ersten Zwischenoberfläche 42 und ggf. der zweiten Fluidspaltoberfläche 32 sowie der dritten Fluidspaltoberfläche 34 strömen kann.

Dem Basiskörper 12 kann ein Netz 102 der Fluidführungsvorrichtung 10 zugeordnet sein, wobei das Netz 102 in radialer Richtung neben dem Basiskörper 12 angeordnet sein kann. Das Netz 102 kann als Durchfluss- bzw. Abflussbegrenzungsmittel ausgebildet sein, so dass insbesondere hochviskoses Fluid, also kaltes Fluid, das Netz 102 nicht durchdringen kann. Bei kaltem Fluid kann folglich das Fluid nicht direkt in den Fluidsumpf gelangen, sondern kann bspw. von dem Netz 102 (das zu diesem Zweck geneigt sein kann) in Richtung hin zu einer oder mehrerer der Fluidspaltoberflächen 30-40 strömen. Hierdurch kann auch bei kaltem Fluid gewährleistet werden, dass den Zahnrädern immer hinreichend Fluid zugeführt wird.

Denn wenn kaltes Fluid in den Fluidsumpf gelangt, müsste es ansonsten zunächst über die Bohrungen 74-80 wieder nach oben in den Bereich der Fluidspalte gedrückt werden, was eine gewisse Zeit in Anspruch nehmen kann und dazu führen kann, dass der Schmierfilm im Bereich eines Zahneingriffs abreißt.

Das Netz 102 ist jedoch nur optional vorgesehen und nicht zwangsläufig Teil der Fluidführungsvorrichtung 10.

Wie es in Fig. 6 gezeigt ist, ist die Fluidführungsvorrichtung 10 vorzugsweise im Bereich eines Bodens eines Gehäuses 104 eines Getriebes 5 angeordnet. Die Außenform der Fluidführungsvorrichtung 10 entspricht dabei möglichst weitgehend der Innenform des Gehäuses 104. In das Gehäuse 104 ist ein Fluid, bspw. ein Getriebeöl, eingefüllt, so dass ein Fluidsumpf 106 gebildet wird. Bei 108 ist ein Fluidruheniveau gezeigt, also ein Niveau des Fluidsumpfes, das bei längerem Stillstand des Fahrzeugs bzw. des Getriebes 5 eingerichtet wird. Es ist zu erkennen, dass das Fluidruheniveau 108 vorzugsweise oberhalb eines untersten Punktes jener Fluidspaltoberfläche 40 liegt, die den kleinsten Durchmesser von allen Fluidspaltoberflächen 30-40 aufweist, so dass in dem Ruhestand gewährleistet ist, dass jeder Fluidspalt mit Fluid gefüllt ist.

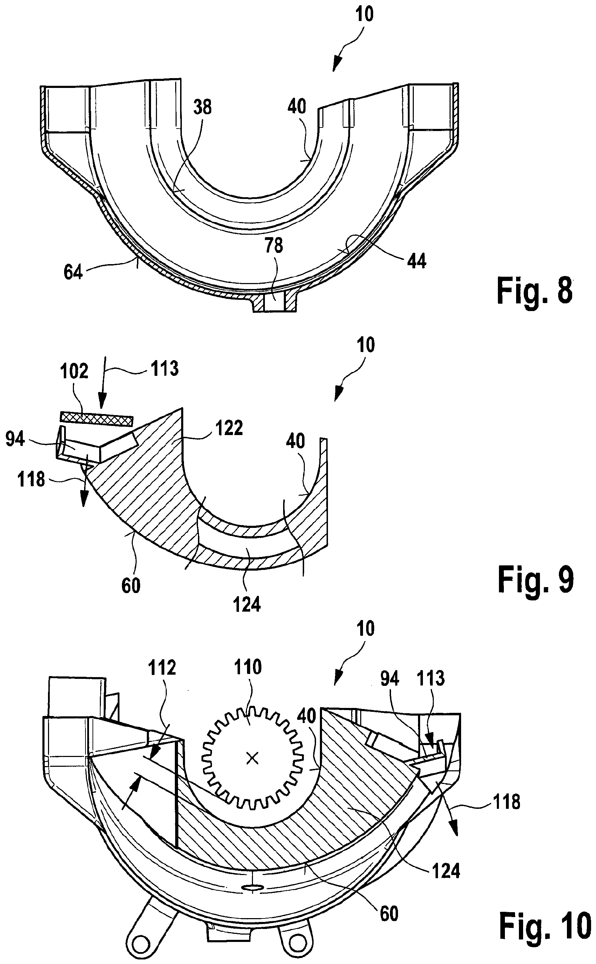

Diese Situation ist in Fig. 10 schematisch dargestellt. Fig. 10 zeigt schematisch ein Zahnrad 110, das im Bereich der sechsten Fluidspaltoberfläche 40 angeordnet ist. Zwischen einem Außenumfang des Zahnrades 110 und der sechsten Fluidspaltoberfläche 40 ist dabei ein Fluidspalt 112 eingerichtet. Wie gesagt, das Ruheniveau des Fluides im Fluidsumpf 106 liegt bei 108, also oberhalb des untersten Punktes der sechsten Fluidspaltoberfläche 40. Demzufolge wird bei Beginn des Betriebs des Getriebes, also wenn das Zahnrad 110 in Drehung versetzt wird, das in dem Fluidspalt 112 enthaltene Fluid mitgerissen und dient der Schmierung eines Zahneingriffs des Zahnrades 110 mit einem weiteren Zahnrad (das bspw. an der Ausgangswelle 9 angeordnet ist).

Ein Teil des mitgerissenen Fluides wird dabei in dem Gehäuse verspritzt und gelangt an Innenwände des Gehäuses. Teilweise wird dabei Fluid in den Rinnen 84, 94 aufgenommen, wie es in Fig. 6 schematisch bei 113 dargestellt ist.

Ferner ergibt im Betrieb eine Fluidströmung entlang der Gehäusewand, wie es bei 114 dargestellt ist, wobei die Fluidströmung dann hin zu dem Fluidsumpf verläuft. Im Bereich der Gehäusewand wird das daran entlangströmende Fluid gekühlt.

Bei 115 ist gezeigt, dass in einer Rinne 84, 94 aufgenommenes Fluid in radialer Richtung hin zu einer der Fluidspaltoberflächen strömen kann, nach der Art eines Überlaufes, wie es in Fig. 6 bei 115 gezeigt ist.

Bei 116 ist gezeigt, dass Fluid aus der Rinne 84 hin zu dem zweiten Rinnenende 88 strömt und von dort nach unten in den Bereich zwischen dem Außenumfang des Basiskörpers 12 und dem Gehäuse 104 tropft. Entsprechend ist ein Abfluss von Fluid aus der zweiten Rinne 94 im Bereich des zweiten Rinnenendes 98 bei 118 schematisch angedeutet.

Das in dem Fluidsumpf zurückfließende Fluid staut sich dort und drückt aufgrund des Staudruckes Fluid nach oben durch die Bohrungen 74 bis 80 hindurch, wie es in Fig. 6 schematisch bei 120 dargestellt ist.

Folglich kann mittels des Basiskörpers 12 erreicht werden, dass immer hinreichend Fluid in die Fluidspalt 112 gelangt, um für eine hinreichende Schmierung in allen Betriebszuständen (kalt, warm etc.) zu sorgen. Über die Rinnen 84, 94 kann das Fluid dabei gezielt zu einem zentralen Bereich des Basiskörpers 12 geführt werden, so dass das Fluid dort hingeführt wird, wo es am dringendsten benötigt wird.

In Fig. 9 ist gezeigt, dass der Basiskörper 12 im Bereich von manchen Fluidspaltoberflächen (hier: die Fluidspaltoberfläche 40) als Volumenkörper zur Bildung eines Verdrängungsvolumens 122 ausgebildet sein kann. Der Basiskörper 12 kann zu diesem Zweck als Vollkörper ausgebildet sein, kann jedoch auch als Hohlkörper ausgebildet sein, wie es in Fig. 9 schematisch bei 124 angedeutet ist.

Ferner ist in Fig. 6 gezeigt, dass bspw. im Bereich der ersten Zwischenoberfläche 42, der Basiskörper ebenfalls als Volumenkörper ausgebildet sein kann. Im Bereich des Umfangsrandes 22 kann der Übergang von der Zwischenoberfläche 42 und der außenliegenden Zwischensumpfoberfläche 62 (siehe Fig. 2) als Schrägabfluss 126 (siehe Fig. 6) ausgebildet sein, so dass von oben darauf auftreffendes Fluid radial nach außen in Richtung hin zu einer Gehäusewandung geführt wird.

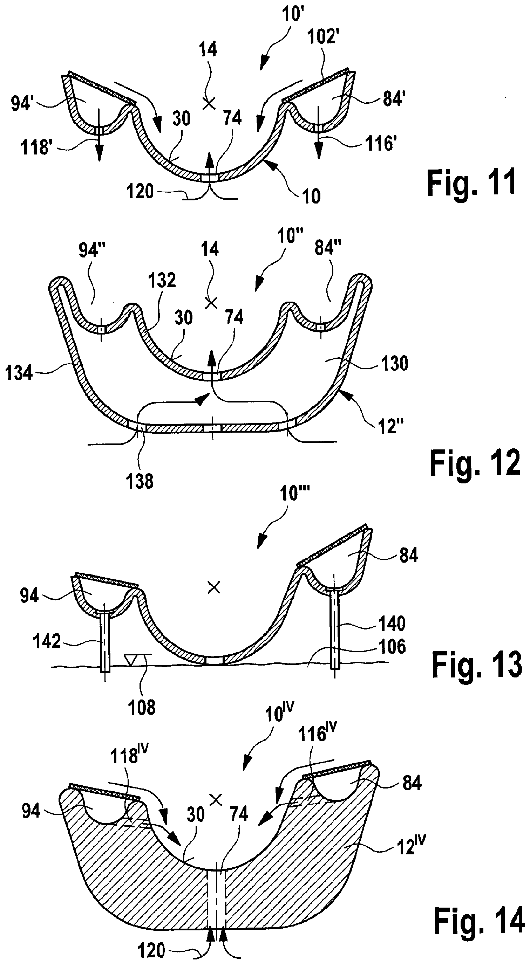

In den Figuren 11 bis 14 sind weitere Ausführungsformen von Fluidführungsvorrichtungen gemäß dem ersten Aspekt gezeigt, die hinsichtlich Aufbau und Funktionsweise generell der Fluidführungsvorrichtung 10 der Figuren 1 bis 10 entsprechen. Gleiche Elemente sind daher durch gleiche Bezugszeichen gekennzeichnet. Im Folgenden werden im Wesentlichen die Unterschiede erläutert.

Bei der Fluidführungsvorrichtung 10' der Fig. 11 ist vorgesehen, dass die Rinnen 84', 94' jeweils im Bereich ihres tiefsten Punktes Bohrungen haben, über die Fluid nach unten abfließen kann, wie es bei 116' bzw. 118' gezeigt ist. Ferner sind die Oberseiten der Rinnen 84', 94' jeweils durch Netze 102' abgedeckt, so dass insbesondere kaltes Fluid von der Oberseite der Netze 102' in Richtung hin zu einer zugeordneten Fluidspaltoberfläche 30 strömen kann, wie es in Fig. 11 durch Pfeile angedeutet ist. Im Bereich eines tiefsten Punktes der Fluidspaltoberfläche 30 ist wiederum eine Bohrung 74 vorgesehen, über die von unten Fluid nach oben strömen kann, wie es bei 120' gezeigt ist.

Bei der Fluidführungsvorrichtung 10" der Fig. 12 ist ein Basiskörper 12" zumindest im Bereich einer Fluidspaltoberfläche 30 zweischalig ausgebildet, mit einer oberen Schale, die hinsichtlich der Form und Funktion der Fluidführungsvorrichtung 10' der Fig. 11 entsprechen kann, und einer unteren Schale, die mit der oberen Schale einen Hohlraum 130 bildet. Die Oberschale ist folglich mit 132 bezeichnet, die Unterschale mit 134. Die Oberschale 132 weist dabei eine Bohrung 74 auf, über die Fluid von unten nach oben in den Bereich der Fluidspaltoberfläche 30 strömen kann. Fluid kann jedoch auch über Bohrungen am Boden der Rinnen 84", 94" in den Hohlraum 130 strömen. Ferner weist die Unterschale 134 eine Mehrzahl von Rückflussöffnungen 138 auf, über die Fluid von dem Fluidsumpf zunächst in den Hohlraum 130 und von dort über die Bohrung 74 in den Bereich der Fluidspaltoberfläche 30 strömen kann, wie es durch Pfeile angedeutet ist.

Fig. 13 zeigt eine weitere Ausführungsform einer Fluidführungsvorrichtung 10'", die hinsichtlich Aufbau und Funktionsweise generell der Fluidführungsvorrichtung 10' der Fig. 11 entspricht. Gleiche Elemente sind daher durch gleiche Bezugszeichen gekennzeichnet. Bei der Fluidführungsvorrichtung 10‴ ist vorgesehen, dass Abflüsse der Rinnen 84, 94 jeweils über Abflussrohre 140, 142 direkt mit einem Fluidsumpf 106 verbunden sind.

Fig. 14 zeigt eine weitere Ausführungsform einer Fluidführungsvorrichtung 10IV. Diese entspricht im Querschnitt im Wesentlichen der Fluidführungsvorrichtung 10" der Fig. 12, wobei der Hohlraum jedoch gefüllt ist, bspw. durch ein Schaummaterial oder dergleichen. Der Basiskörper 12IV kann dabei insgesamt aus einem Volumenmaterial hergestellt sein.

Hierbei ist vorgesehen, dass von den Rinnen 84, 94 jeweils Kanäle hin zu der Fluidspaltoberfläche 30 führen, so dass Fluidströme 116IV, 118IV von den Rinnen 84, 94 direkt hin zu der Fluidspaltoberfläche 30 strömen können. Durch den Basiskörper 12IV hindurch ist ferner eine Bohrung ausgebildet, die in Fig. 14 mit 74 bezeichnet ist und über die Fluid zurückströmen kann, wie es bei 120 angedeutet ist.

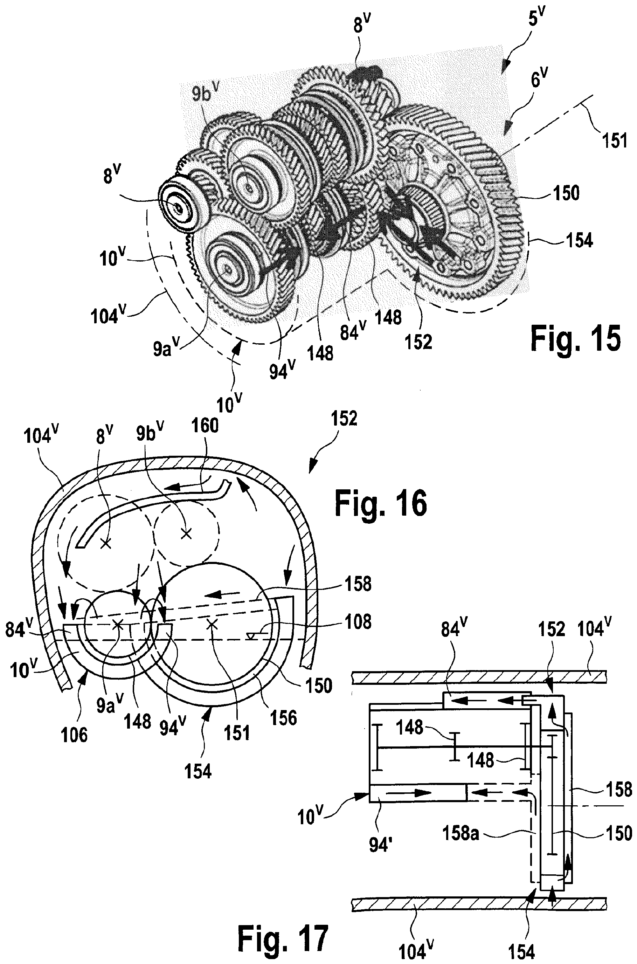

In den Fig. 15 bis 17 sind weitere Ausführungsformen eines Kraftfahrzeuggetriebes 5^{V} gemäß einem zweiten Aspekt gezeigt, die jeweils mit einer Differential-Fluidführungsvorrichtung ausgestattet sind.

Das in Fig. 15 gezeigte Kraftfahrzeuggetriebe 5^{V} beinhaltet eine Eingangswelle 8^{V} sowie zwei parallel angeordnete Ausgangswellen 9a^{v}, 9b^{v}, die jeweils parallel zu der Eingangswelle 8^{V} angeordnet sind. Die Ausgangswellen 9a^{v}, 9b^{v} stehen in Eingriff mit einem Differential 6^{V}, mittels dessen Antriebsleistung verteilbar ist.

Die Ausgangswelle 9a^{v} ist von den Wellen 8^{V}, 9a^{v}, 9b^{v} die im eingebauten Getriebe am tiefsten angeordnete Welle. Unterhalb dieser Ausgangswelle 9a^{v}, die eine Getriebewelle gemäß dem ersten Aspekt darstellt, ist vorzugsweise eine Fluidführungsvorrichtung 10^{v} angeordnet, die hinsichtlich Aufbau und Funktionsweise wenigstens einer der oben unter Bezugnahme auf die Figuren 1 bis 14 beschriebenen Fluidführungs-vorrichtungen entspricht. Das Kraftfahrzeuggetriebe 5^{V} ist in einem Gehäuse 104^{v} aufgenommen, wie es in Fig. 5 schematisch angedeutet ist.

An der Ausgangswelle 9a sind zwei axial versetzte Gang-Zahnräder 148 angeordnet, die zum Einrichten von jeweiligen Gangstufen dienen. Die in Fig. 15 mit 148 bezeichneten Gang-Zahnräder sind vorzugsweise nur einige der mittels des Kraftfahrzeuggetriebes 5^{V} enthaltenen Gang-Zahnräder und sind lediglich beispielhaft genannt.

Die Ausgangswellen 9a^{v}, 9b^{v} stehen, wie erwähnt, in Eingriff mit dem Differential 6^{V}. Das Differential 6^{V} weist ein Differentialzahnrad 150 auf, das entlang einer Differentialachse 151 ausgerichtet ist, die parallel zu den Wellen 8^{v},9a^{v}, 9b^{v} verläuft.

In der Einbaulage reicht das Differentialzahnrad 150 am tiefsten in einen Fluidsumpf 106, dessen normales Fluidniveau 108 in Fig. 16 schematisch angedeutet ist.

Zur Vermeidung von Planschverlusten und zur Optimierung des Fluid-haushaltes ist dem Differentialzahnrad 150 eine Differential-Fluidführungsvorrichtung 152 zugeordnet. Wie es in Fig. 15 zu erkennen ist, kann die Differential-Fluidführungs-vorrichtung 152 dazu ausgelegt sein, Fluid in einer Richtung quer zu der Differentialachse 152 zu führen, und zwar entweder radial hin in einen zentralen Bereich des Fluidsumpfes, bspw. radial nach außen hin zu einer Gehäusewand und dann radial nach innen hin zu einem Fluidsumpfbereich unterhalb des Differentialzahnrades.

Sofern vorliegend von einer radialen Fluidführung gesprochen wird, so soll dies nicht allein eine rein radiale Ausrichtung beinhalten, sondern jede Richtung quer zu der Differentialachse.

Die radiale Fluidführung kann jedoch auch, wie in Fig. 15 angedeutet ist, hin zu der Ausgangswelle 9a^{v} erfolgen, derart, dass im Bereich des Differentialzahnrades hochgeschleudertes Fluid dazu verwendet wird, um bspw. Gang-Zahnräder zu schmieren oder zu kühlen.

Wie es in Fig. 15 ebenfalls schematisch angedeutet ist, kann eine Rad-satz-Fluidführungs-vorrichtung 10^{v} so ausgebildet sein, dass schematisch angedeutete Rinnen 84, 94 das Fluid in axialer Richtung leiten. In manchen Fällen kann die radiale bzw. querverlaufende Fluidführung mittels der Differential-Fluidführungsvorrichtung 154 so ausgebildet sein, dass das so quer geführte Fluid dann hin zu der Radsatz-Fluidführungsvorrichtung geleitet wird, von wo aus es dann weiter in axialer Richtung transportiert wird.

Die Differential-Fluidführungsvorrichtung 152 kann zu den oben genannten Zwecken bspw. einen Differential-Verdrängungskörper 154 aufweisen, der halbschalenartig unterhalb des Differentialzahnrades angeordnet ist, wie es in Fig. 15 bei 154 schematisch angedeutet ist.

Ein derartiger Differential-Verdrängungskörper 154 ist in Fig. 16 schematisch angedeutet. Dort ist aufgezeigt, dass hochgeschleudertes Fluid teilweise wieder über den Differential-Verdrängungskörper 154 aufgefangen werden kann. In Fig. 16 ist ferner schematisch ein Differential-Fluidspalt 156 angedeutet, über den das Fluid im Betrieb nach oben hochgeschleudert wird. Das von dem Differential-Verdrängungskörper 154 aufgefangene Fluid kann bspw. über eine Querrinne 158 in Richtung hin zu der Ausgangswelle 9a^{v} geführt werden, wie es in Fig. 16 ebenfalls schematisch angedeutet ist. Ferner ist es möglich, dass die Differential-Fluidführungsvorrichtung 152 eine Querrinne 160 aufweist, die an der Innenwand des Gehäuses 104^{v} angebracht ist und dazu ausgebildet ist, hochgeschleudertes Fluid in Richtung quer zur Differentialachse 151 zu führen, und zwar in Richtung hin zu der Ausgangswelle 9a^{v}, die vorliegend ein Beispiel einer Getriebewelle für Gang-Radsätze darstellt.

Es ist ferner zu erkennen, dass zwischen dem Differential-Verdrängungskörper 154 bzw. dessen Querrinne 158 und der Radsatz-Fluidführungs-vorrichtung 10^{v}, die in Fig. 16 ebenfalls schematisch angedeutet ist, ein Höhenunterschied bestehen kann, derart, dass das Fluid in der Rinne 158 quer hin zu der Radsatz-Fluidführungsvorrichtung 10^{v} strömt, und zwar vorzugsweise so, dass es in eine der Rinnen 84^{v}, 94^{v} strömt, von wo es dann in axialer Richtung transportiert werden kann, wie es in Fig. 17 in der schematischen Draufsicht dargestellt ist.

Fig. 17 zeigt ferner, dass die Differential-Fluidführungsvorrichtung 154 eine auf der den Radsätzen 148 gegenüberliegenden axialen Seite des Differentialzahnrades 151 angeordnete Querrinne 158 aufweisen kann. Ferner kann die Differential-Fluidführungsvorrichtung auch eine Querrinne 158a aufweisen, die auf der den Radsätzen 148 zugewandten axialen Seite des Differentialzahnrades 150 angeordnet ist.

Vorzugsweise wird das auf diese Weise in Querrichtung geleitete Fluid, das von dem Differentialzahnrad hochgeschleudert worden ist, hin zu einem Zahnrad einer niedrigen Gangstufe geleitet, bei dem in der Regel der Schmierfluidbedarf am höchsten ist.

## Patentansprüche

1. Fluidführungsvorrichtung (10) für ein Kraftfahrzeuggetriebe (5), mit wenigstens zwei in axialer Richtung versetzt angeordneten Fluidspaltoberflächen (30-40), die im Querschnitt kreisbogenförmig in Bezug auf eine Längsachse (14) ausgebildet sind, so dass zwischen den Fluidspaltoberflächen (30-40) und einem jeweils zugeordneten Zahnrad (110) eines Kraftfahrzeuggetriebes (5) jeweils ein Fluidspalt (112) gebildet werden kann, wobei
die Fluidführungsvorrichtung (10) wenigstens eine sich axial erstreckende Rinne (84; 94) aufweist, die von oben mit Fluid (113) befüllbar ist und dazu ausgebildet ist, aufgenommenes Fluid in axialer Richtung zu leiten, und wobei die Rinne wenigstens einen axialen Abfluss (88; 98) aufweist, wobei die Rinne (84; 94) gegenüber der Längsachse (14) geneigt ist, so dass darin aufgenommenes Fluid zu dem axialen Abfluss (88; 98) fließt, wobei wenigstens eine kreisbogenförmige Innenfläche (42) der Fluidführungsvorrichtung (10) an wenigstens einem Umfangsende in einen Schrägabfluss (126) übergeht, von dem aus Fluid direkt in Richtung radial nach außen geleitet wird, wobei die Fluidführungsvorrichtung (10) durch einen wannenförmigen Basiskörper (12) gebildet ist, der an seiner Innenseite die Fluidspaltoberflächen (30-40) aufweist,
**dadurch gekennzeichnet, dass**
der Basiskörper (12) im Bereich von wenigstens einer Fluidspaltoberfläche (30-40) einschalig ausgebildet ist und dass der Basiskörper (12) im Bereich wenigstens einer Fluidspaltoberfläche (30-40) mehrschalig ausgebildet ist, so dass ein geschlossenes Verdrängungsvolumen gebildet ist.

2. Fluidführungsvorrichtung nach Anspruch 1, **dadurch gekennzeichnet, dass** die Rinne (84; 94) einen radialen Fluidüberlauf hin zu einer Fluidspaltoberfläche (30- 40) aufweist.

3. Fluidführungsvorrichtung nach einem der Ansprüche 1 - 2, **dadurch gekennzeichnet, dass** die Fluidführungsvorrichtung (10) ein erstes Längsende (16) und ein zweites Längsende (18) aufweist, wobei die Rinne (84; 94) so ausgestaltet ist, dass darin aufgenommenes Fluid in Richtung von einem der Längsenden (16, 18) hin zu einem Bereich dazwischen abfließt.

4. Fluidführungsvorrichtung nach einem der Ansprüche 1 - 3, **dadurch gekennzeichnet, dass** die Fluidführungsvorrichtung (10) ein erstes Längsende (16) und ein zweites Längsende (18) aufweist, wobei eine erste Rinne (84) im Bereich von dem ersten Längsende (16) angeordnet ist und eine zweite Rinne (94) im Bereich von dem zweiten Längsende (18) angeordnet ist.

5. Fluidführungsvorrichtung nach einem der Ansprüche 1 - 4, **dadurch gekennzeichnet, dass** die Rinne (84; 94) nach oben hin offen ist oder nach oben hin zumindest teilweise durch Durchflussbegrenzungsmittel (102') abgedeckt ist.

6. Fluidführungsvorrichtung nach einem der Ansprüche 1 - 5 **dadurch gekennzeichnet, dass** eine Fluidspaltoberfläche (30, 32, 44, 38) im Bereich eines tiefsten Punktes eine Verbindung (74, 76, 78, 80) mit einer Unterseite der Fluidführungsvorrichtung (10) hat.

7. Kraftfahrzeuggetriebe (5) mit einem Gehäuse (104), innerhalb dessen eine Welle (15) drehbar gelagert ist, an der wenigstens zwei Zahnräder (110) axial versetzt zueinander gelagert sind, wobei in dem Gehäuse (104) und unterhalb der Zahnräder (110) eine Fluidführungsvorrichtung (10) nach einem der Ansprüche 1 - 6 angeordnet ist.

8. Kraftfahrzeuggetriebe (5') nach Anspruch 7 mit einem Gehäuse (104'), innerhalb dessen eine Getriebewelle (8', 9a', 9b') drehbar gelagert ist, an der wenigstens zwei Gang-Zahnräder (148) von Radsätzen zur Einrichtung jeweiliger Gangstufen axial versetzt zueinander gelagert sind, wobei innerhalb des Gehäuses (104') ferner ein Differential (6') angeordnet ist, das um eine zu der Getriebewelle parallel versetzte Differentialachse (151) drehbar gelagert ist und mittels dessen Antriebsleistung verteilbar ist. wobei das Differential (6') ein Differentialzahnrad (150) aufweist, das in einen Fluidsumpf (106) des Gehäuses (104') reicht, und wobei in dem Innenraum des Gehäuses (104') eine Differential- Fluidführungsvorrichtung (152) angeordnet ist, mittels der von dem Differentialzahnrad (150) im Betrieb hochgeschleudertes und von der Differential- Führungsvorrichtung (152) aufgefangenes Fluid in einer Richtung quer zu der Differentialachse (151) geführt wird.

9. Kraftfahrzeuggetriebe nach Anspruch 8, **dadurch gekennzeichnet, dass** die Differential-Fluidführungsvorrichtung (152) einen Differential-Verdrängungskörper (154) aufweist, der unterhalb des Differentialzahnrades (150) angeordnet ist und mit diesem einen Differential-Fluidspalt (156) bildet.

10. Kraftfahrzeuggetriebe nach Anspruch 8 oder 9, **dadurch gekennzeichnet, dass** die Differential-Fluidführungsvorrichtung (152) eine Querrinne (158; 160) aufweist, mittels der das aufgefangene Fluid quer zu der Differentialachse (151) geführt wird, wobei die Querrinne (158; 160) Bestandteil eines Differential- Verdrängungskörpers (154) ist und/oder an einer Innenwand des Gehäuses (104') befestigt ist.

11. Kraftfahrzeuggetriebe nach einem der Ansprüche 8 - 10, wobei die Differential- Fluidführungsvorrichtung (152) und eine Radsatz-Fluidführungsvorrichtung (10'), die eine sich axial erstreckende Rinne (84; 94) aufweist und nach einem der Ansprüche 1 - 9 ausgebildet ist, so in Bezug zueinander in dem Gehäuse (104') angeordnet sind, dass von der Differential-Fluidführungsvorrichtung (152) quer zu der Differentialachse (151) geführtes Fluid zumindest teilweise in die Rinne (84; 94) der Radsatz-Fluidführungsvorrichtung (10') leitbar ist, um das Fluid von dort aus in axialer Richtung weg von dem Differential (6') zu führen.

## Claims

1. Fluid conducting device (10) for a motor vehicle transmission (5), having at least two fluid gap surfaces (30-40) which are arranged offset in an axial direction and which, in cross section, are of circular-arc-shaped form in relation to a longitudinal axis (14) such that in each case one fluid gap (112) can be formed between the fluid gap surfaces (30-40) and an in each case associated toothed gear (110) of a motor vehicle transmission (5), wherein
the fluid conducting device (10) has at least one axially extending channel (84; 94) which can be filled with fluid (113) from above and which is designed to conduct received fluid in an axial direction, and wherein the channel has at least one axial flow outlet (88; 98), wherein the channel (84; 94) is inclined relative to the longitudinal axis (14) such that fluid received therein flows to the axial flow outlet (88; 98), wherein at least one circular-arc-shaped inner surface (42) of the fluid conducting device (10) transitions, at at least one circumferential end, into an oblique flow outlet (126) from which fluid is conducted directly in a radially outward direction, wherein the fluid conducting device (10) is formed by a trough-shaped main body (12) which has the fluid gap surfaces (30-40) on its inner side, **characterized in that** the main body (12) is of single-shell form in the region of at least one fluid gap surface (30-40) and **in that** the main body (12) is of multi-shell form in the region of at least one fluid gap surface (30-40) such that a closed displacement volume is formed.

2. Fluid conducting device according to Claim 1, **characterized in that** the channel (84; 94) has a radial fluid transfer passage towards a fluid gap surface (30-40).

3. Fluid conducting device according to either of Claims 1-2, **characterized in that** the fluid conducting device (10) has a first longitudinal end (16) and a second longitudinal end (18), wherein the channel (84; 94) is designed such that fluid received therein flows out in a direction from one of the longitudinal ends (16, 18) towards a region in between.

4. Fluid conducting device according to any of Claims 1-3, **characterized in that** the fluid conducting device (10) has a first longitudinal end (16) and a second longitudinal end (18), wherein a first channel (84) is arranged in the region of the first longitudinal end (16) and a second channel (94) is arranged in the region of the second longitudinal end (18).

5. Fluid conducting device according to any of Claims 1-4, **characterized in that** the channel (84; 94) is upwardly open or is upwardly at least partially covered by throughflow limiting means (102').

6. Fluid conducting device according to any of Claims 1-5, **characterized in that** a fluid gap surface (30, 32, 44, 38) has, in the region of a lowest point, a connection (74, 76, 78, 80) to a bottom side of the fluid conducting device (10).

7. Motor vehicle transmission (5) having a housing (104) within which there is rotatably mounted a shaft (15) on which at least two toothed gears (110) are mounted so as to be axially offset with respect to one another, wherein a fluid conducting device (10) according to any of Claims 1-6 is arranged in the housing (104) and below the toothed gears (110).

8. Motor vehicle transmission (5') according to Claim 7, having a housing (104') within which there is rotatably mounted a transmission shaft (8', 9a', 9b') on which at least two gear-ratio toothed gears (148) of gear sets for realizing respective gear-ratio stages are mounted so as to be axially offset with respect to one another, wherein, within the housing (104'), there is also arranged a differential (6') which is mounted so as to be rotatable about a differential axis (151) offset in parallel with respect to the transmission shaft and by means of which drive power can be distributed, wherein the differential (6') has a differential toothed gear (150) which extends into a fluid sump (106) of the housing (104'), and wherein, in the interior of the housing (104'), there is arranged a differential fluid conducting device (152) by means of which fluid which is centrifuged upward by the differential toothed gear (150) during operation and collected by the differential conducting device (152) is conducted in a direction transverse with respect to the differential axis (151).

9. Motor vehicle transmission according to Claim 8, **characterized in that** the differential fluid conducting device (152) has a differential displacement body (154) which is arranged below the differential toothed gear (150) and, with the latter, forms a differential fluid gap (156).

10. Motor vehicle transmission according to Claim 8 or 9, **characterized in that** the differential fluid conducting device (152) has a transverse channel (158; 160) by means of which the collected fluid is conducted transversely with respect to the differential axis (151), wherein the transverse channel (158; 160) is a constituent part of a differential displacement body (154) and/or is fastened to an inner wall of the housing (104').

11. Motor vehicle transmission according to any of Claims 8-10, wherein the differential fluid conducting device (152) and a gear-set fluid conducting device (10') which has an axially extending channel (84; 94) and which is designed according to any of Claims 1-9 are arranged relative to one another in the housing (104') such that fluid conducted by the differential fluid conducting device (152) transversely with respect to the differential axis (151) can be conducted at least partially into the channel (84; 94) of the gear-set fluid conducting device (10') in order to conduct the fluid from there in an axial direction away from the differential (6').

## Revendications

1. Dispositif de guidage de fluide (10) pour une boîte de vitesses de véhicule automobile (5), comprenant au moins deux surfaces d'interstice de fluide (30 à 40) disposées de manière décalée dans la direction axiale et réalisées en section transversale en forme d'arc de cercle par rapport à un axe longitudinal (14) de sorte que respectivement un interstice de fluide (112) peut être formé entre les surfaces d'interstice de fluide (30 à 40) et une roue dentée (110) respectivement associée d'une boîte de vitesses de véhicule automobile (5), dans lequel
le dispositif de guidage de fluide (10) présente au moins une rigole s'étendant axialement (84 ; 94) qui peut être remplie par le haut avec du fluide (113) et est réalisée pour conduire du fluide reçu dans la direction axiale, et dans lequel la rigole présente au moins une sortie d'écoulement axiale (88 ; 98), la rigole (84 ; 94) étant inclinée par rapport à l'axe longitudinal (14) de sorte que le fluide reçu dans celle-ci s'écoule vers la sortie d'écoulement axiale (88 ; 98), dans lequel au moins une surface intérieure en forme d'arc de cercle (42) du dispositif de guidage de fluide (10) se prolonge au niveau d'au moins une extrémité périphérique par une sortie d'écoulement oblique (126) depuis laquelle du fluide peut être conduit directement dans la direction radialement vers l'extérieur, dans lequel le dispositif de guidage de fluide (10) est formé par un corps de base (12) en forme de cuvette qui présente les surfaces d'interstice de fluide (30 à 40) sur sa face intérieure,
**caractérisé en ce que** le corps de base (12) est réalisé sous forme monocoque dans la région d'au moins une surface d'interstice de fluide (30 à 40), et **en ce que** le corps de base (12) est réalisé sous forme multicoque dans la région d'au moins une surface d'interstice de fluide (30 à 40) de façon à former un volume de refoulement fermé.

2. Dispositif de guidage de fluide selon la revendication 1, **caractérisé en ce que** la rigole (84 ; 94) présente un trop-plein de fluide radial vers une surface d'interstice de fluide (30 à 40).

3. Dispositif de guidage de fluide selon l'une quelconque des revendications 1 à 2, **caractérisé en ce que** le dispositif de guidage de fluide (10) présente une première extrémité longitudinale (16) et une deuxième extrémité longitudinale (18), dans lequel la rigole (84 ; 94) est configurée de telle sorte que du fluide reçu dans celle-ci s'écoule dans la direction de l'une des extrémités longitudinales (16, 18) vers une région entre celles-ci.

4. Dispositif de guidage de fluide selon l'une quelconque des revendications 1 à 3, **caractérisé en ce que** le dispositif de guidage de fluide (10) présente une première extrémité longitudinale (16) et une deuxième extrémité longitudinale (18), dans lequel une première rigole (84) est disposée dans la région de la première extrémité longitudinale (16) et une deuxième rigole (94) est disposée dans la région de la deuxième extrémité longitudinale (18).

5. Dispositif de guidage de fluide selon l'une quelconque des revendications 1 à 4, **caractérisé en ce que** la rigole (84 ; 94) est ouverte vers le haut et est recouverte vers le haut au moins partiellement par des moyens de limitation de débit (102').

6. Dispositif de guidage de fluide selon l'une quelconque des revendications 1 à 5, **caractérisé en ce qu'**une surface d'interstice de fluide (30, 32, 44, 38) présente dans la région d'un point le plus bas une connexion (74, 76, 78, 80) à une face inférieure du dispositif de guidage de fluide (10).

7. Boîte de vitesses de véhicule automobile (5), comprenant un carter (104) à l'intérieur duquel un arbre (15) est monté rotatif, au niveau duquel au moins deux roues dentées (110) sont montées de manière axialement décalée l'une par rapport à l'autre, dans lequel un dispositif de guidage de fluide (10) selon l'une quelconque des revendications 1 à 6 est disposé dans le carter (104) et en dessous des roues dentées (110).

8. Boîte de vitesses de véhicule automobile (5') selon la revendication 7, comprenant un carter (104') à l'intérieur duquel un arbre de boîte de vitesses (8', 9a', 9b') est monté rotatif, au niveau duquel au moins deux roues dentées de vitesses (148) de jeux de roues sont montés de manière axialement décalée l'une par rapport à l'autre pour réaliser des rapports de vitesse respectifs, dans laquelle à l'intérieur du carter (104'), en outre un différentiel (6') est disposé qui est monté rotatif autour d'un axe de différentiel (151) décalé en parallèle par rapport à l'arbre de boîte de vitesses et qui permet de répartir la puissance d'entraînement de celui-ci, dans laquelle le différentiel (6') présente une roue dentée de différentiel (150) qui s'étend dans un collecteur de fluide (106) du carter (104'), et dans laquelle dans l'espace intérieur du carter (104'), un dispositif de guidage de fluide de différentiel (152) est disposé qui permet de guider du fluide projeté par la roue dentée de différentiel (150) en cours de fonctionnement et reçu par le dispositif de guidage de différentiel (152) dans une direction transversale à l'axe de différentiel (151).

9. Boîte de vitesses de véhicule automobile selon la revendication 8, **caractérisée en ce que** le dispositif de guidage de fluide de différentiel (152) présente un corps de refoulement de différentiel (154) qui est disposé en dessous de la roue dentée de différentiel (150) et forme avec celle-ci un interstice de fluide de différentiel (156).

10. Boîte de vitesses de véhicule automobile selon la revendication 8 ou 9, **caractérisée en ce que** le dispositif de guidage de fluide de différentiel (152) présente une rigole transversale (158 ; 160) qui permet de guider le fluide collecté transversalement à l'axe de différentiel (151), la rigole transversale (158 ; 160) faisant partie d'un corps de refoulement de différentiel (154) et/ou étant fixée à une paroi intérieure du boîtier (104').

11. Boîte de vitesses de véhicule automobile selon l'une quelconque des revendications 8 à 10, dans laquelle le dispositif de guidage de fluide de différentiel (152) et un dispositif de guidage de fluide de jeu de roues (10') qui présente une rigole s'étendant axialement (84 ; 94) et étant réalisée selon l'une quelconque des revendications 1 à 9, sont disposés l'un par rapport à l'autre dans le carter (104') de telle sorte que le fluide guidé par le dispositif de guidage de fluide de différentiel (152) transversalement à l'axe de différentiel (151) peut être conduit au moins en partie dans la rigole (84 ; 94) du dispositif de guidage de fluide de jeu de roues (10') afin de guider le fluide depuis cet endroit dans la direction axiale à l'écart du différentiel (6').
